# EUROPEAN PATENT SPECIFICATION

(11) **EP 3 845 314 B1**
(45) Date of publication and mention of the grant of the patent: **14.06.2023**
(21) Application number: 20212419.4
(22) Date of filing: 08.12.2020
(51) Int. Cl.: B05B 13/04, A01M 7/00

(54) **AIR JET SPRAY DEVICE COMPRISING A ROTATABLE AIR JET SPRAY CANNON**
LUFTSPRÜHVORRICHTUNG MIT EINER DREHBAREN LUFTSPRÜHKANONE
DISPOSITIF DE PULVÉRISATION À AIR COMPRENANT UN CANON DE PULVÉRISATION À AIR ROTATIF

(30) Priority: 31.12.2019 BE 201906007
(43) Date of publication of application: 07.07.2021
(73) Proprietor: Mindinvest B.V., 2960 Brecht (BE)
(72) Inventor: Van Aert, Johan, 2960 Brecht (BE); Van de Velde, Dirk Jozef Jan, 2243 Zandhoven (BE)
(74) Representative: Arnold & Siedsma

(56) References cited:
- WO-A1-88/00680
- CN-B- 105 834 042
- US-A- 2 785 008
- US-A- 3 883 073
- US-A- 3 895 756

## Description

The invention relates to an air jet spray device configured to spray a liquid-gas mixture, comprising a frame and an outlet nozzle.

Such an air jet spray device is known from US3774845 and is used for spraying trees and plants, for instance in an orchard. For this purpose the air jet spray device comprises a fan which draws in air and blows it out via a channel. Mounted on an outlet of the channel is an annular outlet nozzle which guides the blown-out air toward the trees. Mounted on the annular outlet nozzle is a plurality of shutters, each provided to close a portion of the outlet nozzle. A liquid nozzle is mounted at the position of each shutter for the purpose of atomizing liquid in the blown-out air. A liquid-gas mixture which can be sprayed onto the trees and plants will thus be obtained in this way.

A drawback of such an air jet spray device is that it aims the blown-out air at the trees or plants in sub-optimal manner by means of a plurality of shutters. A substantial quantity of liquid-gas mixture is hereby lost. A further drawback is that the air jet spray device is complex and maintenance thereof is expensive due to the many moving parts. A spraying apparatus, especially designed for the treatment of crops, and relating more particularly to spraying units comprising a fan or a blower and which can be oscillated during its movement, is known from US3883073A.

It is an object of the invention to provide an improved air jet spray device which can be controlled in simple manner and is durable, and also sprays in more optimal manner.

Provided for this purpose is an air jet spray device for spraying a liquid-gas mixture, comprising a frame, an air jet spray cannon and an actuator which is arranged between the frame and the air jet spray cannon for rotating the air jet spray cannon relative to the frame in a rotation direction between a first and a second end position, wherein the first and second end positions are determined by respectively a first and a second position determining means, wherein each position determining means is configured to detect one of said first and second end position and to reverse the rotation direction on the basis of the detection, the air jet spray further comprising a graduated arc which is provided on the frame, wherein the first and second position determining means comprise a first and a second position limiting element and a switching relay compatible with the first and second position limiting element, wherein the switching relay is coupled to the air jet spray cannon, wherein the first and the second position limiting element are coupled to the graduated arc and wherein the rotation direction runs along the graduated arc.

Because a rotatable air jet spray cannon is used, the air jet spray cannon can spray optimally in every position because there are no shutters which guide, deflect or obstruct the air in order to influence the direction. By rotating the air jet spray cannon the air jet spray device will spray a relatively large spraying area in efficient and directional manner. An advantage hereof is that trees or plants to be sprayed are sprayed in efficient and directional manner. By rotating the air jet spray cannon between a first and a second end position the spraying direction changes. Because only the rotation movement of the air jet spray cannon need be controlled, the air jet spray device can moreover be controlled in simple manner. A further advantage of the air jet spray device is that it is provided with a first and a second position determining means which reverse the rotation direction when the respective first and second end position are reached. It follows herefrom that the air jet spray cannon rotates reciprocally between the two end positions. This allows plants or trees to be sprayed in continuous consistent and precise manner, resulting in an improved treatment thereof. Owing to the small number of moving parts, the air jet spray device is additionally easy to manufacture and low-maintenance.

The air jet spray device comprises a graduated arc which is provided on the frame, wherein the first and second position determining means comprise a first and a second position limiting element and a switching relay compatible with the first and second position limiting element, wherein the switching relay is coupled to the air jet spray cannon, wherein the first and the second position limiting element are coupled to the graduated arc and wherein the rotation direction runs along the graduated arc. Because the position limiting elements are each coupled to the graduated arc, the spraying direction can be read in simple manner at the end positions. The air jet spray cannon can hereby be aimed in improved manner. The angle through which the air jet spray cannon rotates can be adjusted in simple manner by repositioning the position limiting elements on the graduated arc.

The graduated arc is preferably provided with a plurality of locks which are distributed over the graduated arc, wherein each lock is configured to receive one of the first and the second position limiting element. Because a plurality of locks are distributed over the graduated arc, the position limiting elements are easily displaceable. In this way the end positions of the air jet spray cannon can be changed, for instance by displacing the first position determining means to a different lock. This enables the air jet spray cannon to oscillate between multiple different end positions. The air jet spray device can hereby be utilized more flexibly. The air jet spray device can hereby for instance be used to spray poplars along a lane and subsequently spray apple trees in an orchard. The skilled person will appreciate that poplars and apple trees have greatly differing heights.

At least one further position limiting element is preferably provided, wherein the at least one further position limiting element can be set to one of an active state and a passive state. Manually displacing a position determining means is labour-intensive in practice. Because a plurality of position limiting elements are provided, which are controllable, the air jet spray device can be aimed more easily and is more user-friendly. This is because displacement of the position determining means to other locks is hereby also decreased or substantially avoided. In other words, the manual intervention by an operator for displacing the position limiting element when setting the operating range of the air jet spray cannon is no longer necessary. By controlling a position limiting element from an active to a passive state or vice versa, the operating range of the air jet spray device can be set.

The air jet spray device preferably further comprises a power source which is configured to supply power to the actuator, and the switching relay is operatively coupled to a first control circuit, wherein the first control circuit is configured to reverse the rotation direction of the actuator on the basis of the switching relay. More specifically, the switching relay will reverse the rotation direction of the actuator when one of the first and second end position is reached.

The switching relay is preferably a relay which can be switched magnetically. An advantage hereof is that magnetically switchable contacts can function in contactless manner. This reduces wear of the contacts or substantially avoids wear due to friction. The position limiting elements preferably comprise magnets. The position limiting elements more preferably comprise electromagnets. A polarity of at least a part of the electromagnets is preferably controllable by means of a second control circuit. Because the polarity of the electromagnet is controllable, the electromagnet can be set to one of an active and a passive state. In other words, an operator can control the electromagnet individually in simple manner, for instance in order to set the operating range of the air jet spray cannon.

The switching relay is preferably a latching reed relay. The inventiveness hereof is based on the insight that a latching reed relay switches on the basis of a determined polarity of an applied magnetic field. Because the electromagnet can not only be set to one of an active and a passive state but the polarity of the electromagnet can furthermore also be reversed, the latching reed relay can be switched using one type of position limiting element. In other words, a simple and robust actuator control is realized using this embodiment.

The second control circuit is preferably a three-position switch, a first position and a second position of which determine an active state, wherein the first position determines a first polarity, a second position determines a second polarity which is opposite to the first polarity, and a third position determines a passive state. The three-position switch can here be operated directly by an operator, or the three-position switch can be operated indirectly, for instance via a digital interface. The air jet spray device hereby provides a simple mechanism for setting the polarity of the position limiting elements, which allows any operator to set the operating range of the air jet spray cannon quickly and accurately.

The invention will now be further described on the basis of an exemplary embodiment shown in the drawing.

In the drawing:
figure 1 shows a perspective view of an air jet spray device according to an embodiment;
figure 2 shows a perspective view of an air jet spray device according to an alternative embodiment;
figure 3 shows a schematic drawing of an air jet spray device with a first control circuit;
figure 4 shows a schematic drawing of an air jet spray device with position determining means with a second control circuit.

The same or similar elements are designated in the drawing with the same reference numerals.

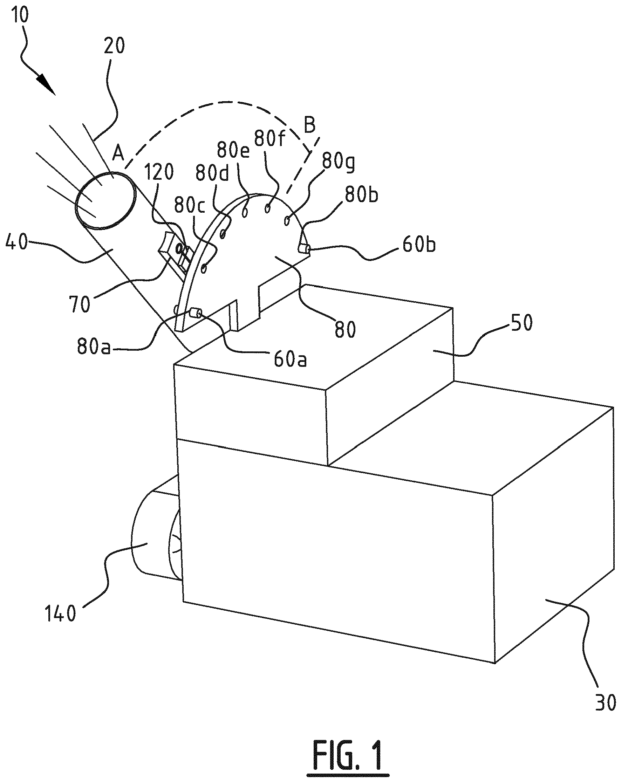

Figure 1 illustrates an air jet spray device 10 which is configured to spray a liquid-gas mixture 20. In the context of the application the liquid-gas mixture 20 is a mixture of an airflow and a liquid. The liquid can for instance be water. Additives such as insecticides or fertilizer products can optionally also be added to the liquid. The skilled person will appreciate that there are different ways to mix the airflow with liquid for the purpose of forming liquid-gas mixture 20, for instance by atomizing the liquid in the airflow.

Air jet spray device 10 comprises a frame 30, an air jet spray cannon 40 and an actuator 50 which is arranged between frame 30 and air jet spray cannon 40. Frame 30 can form at least a part of the housing of air jet spray device 10 and/or form a structural framework which supports or is connected to further elements, for instance a fan 140, liquid tank (not shown), transport means (not shown), and so on.

Actuator 50 is arranged between frame 30 and air jet spray cannon 40 in order to rotate air jet spray cannon 40 relative to frame 30 in a rotation direction. In other words, actuator 50 is arranged on the frame such that air jet spray cannon 40 can rotate via the actuator about a rotation shaft of the frame. The rotation shaft can correspond with a drive shaft of actuator 50. In a preferred embodiment air jet spray cannon 40 is provided to rotate along a rotation direction which runs in a plane lying substantially transversely relative to a primary direction of movement of frame 30. The plane is here oriented substantially in a vertical direction. The rotation direction can be clockwise or anti-clockwise. The actuator 50 can be a DC motor or a phase motor. Actuator 50 can be coupled via the rotation shaft to air jet spray cannon 40 or, in an alternative embodiment, can be connected via an eccentrically placed coupling means 70 to the air jet spray cannon. Coupling means 70 can for instance be a bracket.

Air jet spray cannon 40 is configured to spray liquid-gas mixture 20 in a spraying direction. By rotating the air jet spray cannon 40 an operating area is obtained which is greater than the direct range of the air jet spray cannon per se. Air jet spray cannon 40 comprises an air channel which comprises a fan 140. The fan draws air in from outside. The fan makes the air flow through the air channel so that the air blows out of the air channel. For this purpose the air channel comprises an outlet from which the air blows. At the position of the outlet one or more atomizing devices can be arranged, which atomize liquid in the blown-out airflow for the purpose of forming the liquid-gas mixture. The inlet side can optionally be coupled to a flexible corrugated pipe in order to connect the rotatable air jet spray cannon to a fixedly positioned air inlet in simple manner. The outlet can optionally form a nozzle for controlling for instance a shape to be blown, diameter to be blown or an airflow rate.

Air jet spray device 10 further comprises position determining means which determine a first and a second end position A, B. The position determining means are configured to detect one of said first and second end position of air jet spray cannon 40 and to reverse the rotation direction of air jet spray cannon 40 on the basis of the detection. In an exemplary embodiment the position determining means can be limit switches which are arranged in a rotation path of the air jet spray cannon in order to reverse the rotation direction in the case that the air jet spray cannon comes into contact with the limit switches.

In a preferred embodiment a position determining means is formed by a position limiting element 60a, 60b which is compatible with a switching relay 120. In the first and second end position the position limiting element 60a, 60b will interact with switching relay 120 in order to reverse the rotation direction. In such a preferred embodiment the position determining means comprise position limiting elements 60a, 60b which determine respectively the first and second end position A, B. Switching relay 120 is preferably arranged on the air jet spray cannon. In other words, the first and second position determining means 60a, 60b correspond with the respective first and second end position A, B.

In an example of the embodiment, illustrated in figure 1, air jet spray cannon 40 can rotate from the end position A, in a rotation direction, to the second end position B. When air jet spray cannon 40 reaches the second end position B, the second position determining means 60b detects that air jet spray cannon 40 is in the second end position, and the rotation direction of the actuator reverses. Air jet spray cannon 40 will hereby rotate in opposite rotation direction, back to end position A. The skilled person will appreciate that during rotation from end position B to end position A a similar reversal takes place when air jet spray cannon 40 reaches end position A. Air jet spray cannon 40 thereby oscillates between the first and second end position A, B. In other words, air jet spray cannon 40 rotates reciprocally. During the oscillation between the first and second end position A, B the air jet spray device sprays the liquid-gas mixture in the spraying direction. The air jet spray device hereby thus has an operating area which is defined by the first and second end positions A, B.

In the preferred embodiment illustrated in figure 1 air jet spray device 10 further comprises a graduated arc 80 which is provided on frame 30. In the context of the application a graduated arc is defined as a curved element along which the air jet spray cannon runs when rotating. A rotation position can hereby be inferred from the graduated arc, this being a vertical rotation position in the illustrated embodiment of figure 1. Graduated arc 80 is illustrated as semicircular in order to define for instance angles with a predetermined intermediate distance of 0° to 180°. It will be apparent to the skilled person that graduated arc 80 can also define a range greater than 180°, for instance up to 270°. It will further be apparent that other forms, such as for instance an angle measuring device, can be used to obtain the same effect. The position determining means are preferably arranged partially on the graduated arc in order to detect the position of air jet spray device 10 in improved manner.

The graduated arc is further provided with a plurality of locks 80a, ..., 80g. The locks are configured to receive a portion of the position determining means. The locks are preferably configured to receive one of the first and second position limiting elements 60a, 60b. The locks are preferably distributed over the graduated arc. The locks are preferably provided at a predetermined mutual distance, a lock is for instance provided every 10° of the graduated arc.

In a preferred embodiment at least one further position determining means is provided, wherein each position determining means can be set to one of an active state and a passive state, wherein in the active state the position determining means detects the end position. In an exemplary embodiment a position determining means can be set to an active state by placing the position determining means in or close to the rotation path of the air jet spray cannon. A position determining means is preferably provided in each lock.

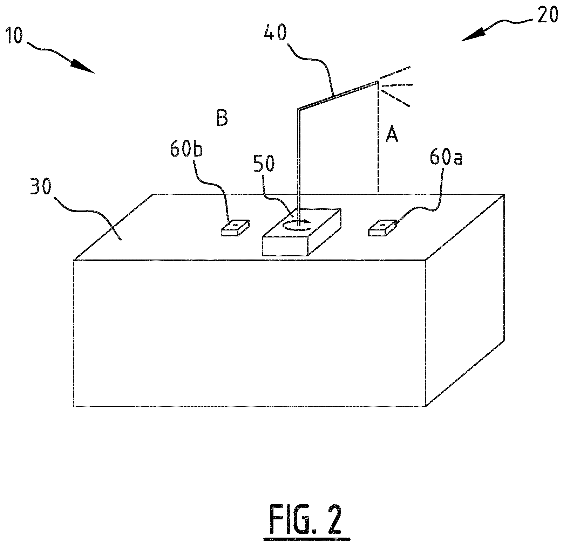

Figure 2 illustrates an alternative embodiment wherein the air jet spray cannon is rotatable about a vertical axis. The air jet spray cannon can thus rotate about an upright axis. The features which are described in figure 1 also apply in the embodiment of figure 2, a graduated arc can thus for instance be arranged on frame 30 in order to show a horizontal rotation position.

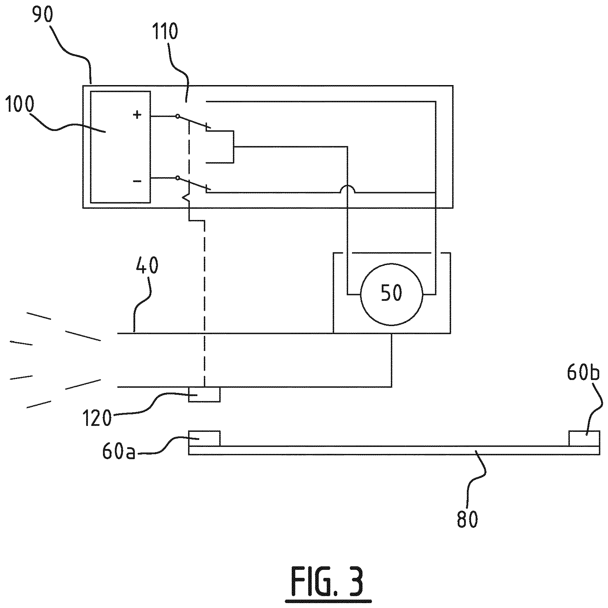

Figure 3 illustrates a schematic drawing of an air jet spray device with a first control circuit 110. Figure 3 illustrates with the broken line that the switching relay 120 is operatively coupled to the first control circuit 110. Switching relay 120 is arranged on the air jet spray cannon 40. Air jet spray cannon 40 is in a first end position A, which is determined by the position limiting element 60a.

In the preferred embodiment illustrated in figure 3 the position determining means comprise magnets. In figure 3 the magnets form the position limiting elements 60a, 60b. These magnets thereby determine respective end positions A, B. In the end positions A, B the magnets interact with the compatible switching relay 120 in order to reverse the rotation direction of the actuator. In a further embodiment the position determining elements can comprise electromagnets. An advantage hereof is that electromagnets can be controlled, this embodiment is described further below.

In the end positions A, B switching relay 120 is operatively coupled to the position limiting element 60a, 60b. Switching relay 120 is preferably a relay which can be switched magnetically, such as a reed switch, which switches when a magnetic field is present in the vicinity of switching relay 120. In end position A switching relay 120 will detect the magnetic field of position limiting element 60a and thereby switch.

Switching relay 120 is operatively coupled to first control circuit 110, which is configured to reverse the rotation direction of the actuator on the basis of switching relay 120. Figure 3 further shows that the first control circuit is arranged between a power source 100 and the actuator 50. First control circuit 110 preferably comprises a double-pole changeover switch which is able to reverse a polarity of the actuator 50 by switching.

A control device 90 can optionally comprise the first control circuit 110 and the power source 100.

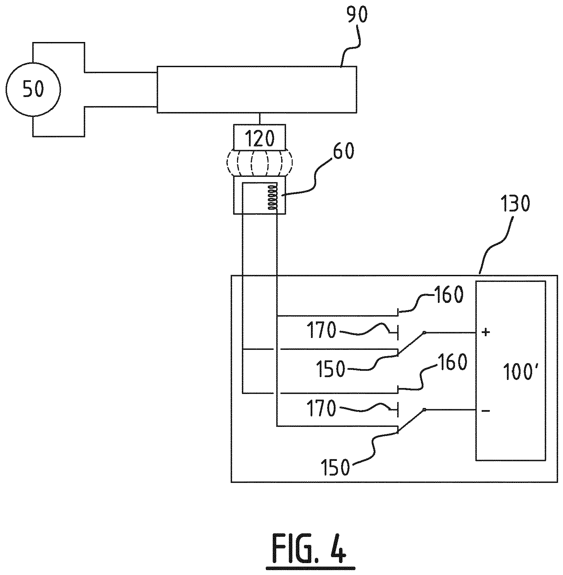

Figure 4 illustrates a further embodiment according to figure 3, with the difference that a position limiting element is controllable. The first control circuit 110 described in the context of figure 3 is shown as a control device 90. In the preferred embodiment according to figure 4 the position limiting element 60 comprises an electromagnet, wherein a polarity of the electromagnet is controllable by means of a second control circuit 130. Because the polarity of the electromagnet is controllable, the electromagnet can be set to one of an active state and a passive state. By for instance optionally having an energizing current run through a coil of the electromagnet, the electromagnet will optionally emit a magnetic field which is detectable by a magnetically switchable contact 120.

In yet another embodiment switching relay 120 is a latching reed relay. The inventiveness hereof is based on the insight that a latching reed relay switches on the basis of a polarity of the detected magnetic field. Because the polarity of the electromagnet is controllable, the latching reed relay can be switched on a selective basis. According to an example, an electromagnet which determines the first end position can be controlled such that when the first end position is reached, the latching reed relay switches and the rotation direction of actuator 50 reverses. At the second end position an electromagnet must then be arranged with a polarity opposite to the polarity of the electromagnet in order to switch the latching reed relay such that the rotation direction reverses once again. It will be apparent to the skilled person that such an embodiment can also be produced using permanent magnets, by orienting the permanent magnets in an opposite direction relative to each other. An advantage of electromagnets relative to permanent magnets is that electromagnets are polarizable by controlling a current direction of the energizing current. In the illustrated preferred embodiment a second control circuit 130 is provided for this purpose.

The second control circuit 130 preferably comprises a three-position switch, a first position 150 and a second position 160 of which determine an active state, wherein the first position 150 determines a first polarity, a second position 160 determines a second polarity which is opposite to the first polarity, and a third position 170 determines a passive state. The second control circuit is preferably a tripolar changeover switch with a double throw which is arranged between a power source 100' and an electromagnet. In an example the first position can determine a North-South polarization of the electromagnet and the second position a South-North polarization. In the third position no energizing current is provided, and the electromagnet does not emit a noticeable magnetic field.

In a preferred embodiment wherein a plurality of position determining means are provided, for instance ten position determining means, these being distributed over a graduated arc, each electromagnet thereof is provided with a second control circuit 130. An operator can control the spraying area of the air jet spray device in simple and efficient manner on the basis of the second control circuit 130 by selectively switching a first and a second electromagnet to one of a first and a second position. An electromagnet can thus for instance be switched to the first position at 90° and the electromagnet can be switched to the second position at 180° so as to thus allow the air jet spray cannon to rotate reciprocally between 90° and 180°. The operator can for instance change the range during use or during standstill by switching the electromagnet to the third position at 90° and switching the electromagnet to the first position at 45°. It will be apparent that a plurality of operating areas can hereby be changed in simple and efficient manner.

The skilled person will appreciate on the basis of the above description that the invention can be embodied in different ways and on the basis of different principles. The invention is not limited to the above described embodiments. The above described embodiments and the figures are purely illustrative and serve only to increase understanding of the invention. The invention will not therefore be limited to the embodiments described herein, but is defined in the claims.

## Claims

1. Air jet spray device (10) for spraying a liquid-gas mixture (20), comprising a frame (30), an air jet spray cannon (40) and an actuator (50) which is arranged between the frame (30) and the air jet spray cannon (40) for rotating the air jet spray cannon (40) relative to the frame (30) in a rotation direction between a first and a second end position (A, B), wherein the first and second end positions are determined by respectively a first and a second position determining means, wherein each position determining means is configured to detect one of said first and second end position and to reverse the rotation direction on the basis of the detection, **characterized in that** the air jet spray device further comprises a graduated arc (80) which is provided on the frame (30), wherein the first and second position determining means comprise a first and a second position limiting element (60a, 60b) and a switching relay compatible with the first and second position limiting element, wherein the switching relay is coupled to the air jet spray cannon, wherein the first and the second position limiting element are coupled to the graduated arc and wherein the rotation direction runs along the graduated arc (80).

2. Air jet spray device (10) according to claim 1, wherein the graduated arc is provided with a plurality of locks (80a, 80b, ..., 80g) which are distributed over the graduated arc, wherein each lock is configured to receive one of the first and the second position limiting element (60a, 60b).

3. Air jet spray device (10) according to any one of the foregoing claims, wherein at least one further position determining means (60a, 60b, ..., 60g) is provided, wherein each position determining means can be set to one of an active state and a passive state, wherein in the active state the position determining means detects the end position.

4. Air jet spray device (10) according to claim 1, further comprising a power source (100) which is configured to supply power to the actuator (50), and wherein the switching relay (120) is operatively coupled to a first control circuit (110), wherein the first control circuit is configured to reverse the rotation direction of the actuator on the basis of the switching relay (120).

5. Air jet spray device (10) according to the foregoing claim, wherein the switching relay (120) is a relay which can be switched magnetically.

6. Air jet spray device (10) according to the foregoing claim, wherein the position determining means comprise magnets.

7. Air jet spray device (10) according to the foregoing claim, wherein the position determining means comprise electromagnets.

8. Air jet spray device (10) according to the foregoing claim, wherein a polarity of at least a part of the electromagnets is individually controllable by means of a second control circuit (130).

9. Air jet spray device (10) according to the foregoing claim, wherein the switching relay (120) is a latching reed relay.

10. Air jet spray device (10) according to the foregoing claim, wherein the second control circuit is a three-position switch, a first position and a second position of which determine an active state, wherein the first position determines a first polarity, a second position determines a second polarity which is opposite to the first polarity, and a third position determines a passive state.

## Patentansprüche

1. Luftsprühvorrichtung (10) zum Sprühen eines Flüssigkeit-Gas-Gemisches (20), mit einem Rahmen (30), einer Luftsprühkanone (40) und einem Stellantrieb (50), der zwischen dem Rahmen (30) und der Luftsprühkanone (40) zum Drehen der Luftsprühkanone (40) bezüglich des Rahmens (30) in einer Drehrichtung zwischen einer ersten und einer zweiten Endposition (A, B) angeordnet ist, wobei die erste und zweite Endposition durch jeweils eine erste und eine zweite Positionsbestimmungseinrichtung bestimmt werden, wobei jede Positionsbestimmungseinrichtung so konfiguriert ist, dass sie eine der ersten und zweiten Endposition erfasst und die Drehrichtung aufgrund der Erfassung umkehrt, **dadurch gekennzeichnet, dass** die Luftsprühvorrichtung weiterhin einen Gradbogen (80) aufweist, der an dem Rahmen (30) vorgesehen ist, wobei die erste und zweite Positionsbestimmungseinrichtung ein erstes und ein zweites Positionsbegrenzungselement (60a, 60b) sowie ein Schaltrelais aufweisen, das mit dem ersten und zweiten Positionsbegrenzungselement kompatibel ist, wobei das Schaltrelais mit der Luftsprühkanone gekoppelt ist, wobei das erste und das zweite Positionsbegrenzungselement mit dem Gradbogen gekoppelt sind und wobei die Drehrichtung entlang dem Gradbogen (80) verläuft.

2. Luftsprühvorrichtung (10) nach Anspruch 1, wobei der Gradbogen mit einer Mehrzahl von Verriegelungen (80a, ..., 80g) versehen ist, die über den Gradbogen verteilt sind, wobei jede Verriegelung dazu konfiguriert ist, eines des ersten und des zweiten Positionsbegrenzungselements (60a, 60b) aufzunehmen.

3. Luftsprühvorrichtung (10) nach einem der vorhergehenden Ansprüche, wobei mindestens eine weitere Positionsbestimmungseinrichtung (60a, 60b, ..., 60g) vorgesehen ist, wobei jede Positionsbestimmungseinrichtung entweder in einen aktiven Zustand oder in einen passiven Zustand versetzt werden kann, wobei die Positionsbestimmungseinrichtung im aktiven Zustand die Endposition erfasst.

4. Luftsprühvorrichtung (10) nach Anspruch 1, weiterhin mit einer Stromquelle (100), die dazu konfiguriert ist, das Stellglied (50) mit Strom zu versorgen, und wobei das Schaltrelais (120) mit einem ersten Steuerkreis (110) wirkverbunden ist, wobei der erste Steuerkreis dazu konfiguriert ist, die Drehrichtung des Stellglieds anhand des Schaltrelais (120) umzukehren.

5. Luftsprühvorrichtung (10) nach dem vorhergehenden Anspruch, wobei das Schaltrelais (120) aus einem Relais besteht, das magnetisch schaltbar ist.

6. Luftsprühvorrichtung (10) nach dem vorhergehenden Anspruch, wobei die Positionsbestimmungseinrichtung Magnete aufweist.

7. Luftsprühvorrichtung (10) nach dem vorhergehenden Anspruch, wobei die Positionsbestimmungseinrichtung Elektromagnete aufweist.

8. Luftsprühvorrichtung (10) nach dem vorhergehenden Anspruch, wobei eine Polarität von mindestens einem Teil der Elektromagneten mithilfe eines zweiten Steuerkreises (130) einzeln steuerbar ist.

9. Luftsprühvorrichtung (10) nach dem vorhergehenden Anspruch, wobei das Schaltrelais (120) ein einrastendes Reed-Relais ist.

10. Luftsprühvorrichtung (10) nach dem vorhergehenden Anspruch, wobei der zweite Steuerkreis aus einem Dreiwegeschalter besteht, dessen erste Stellung und zweite Stellung einen aktiven Zustand festlegen, wobei die erste Stellung eine erste Polarität festlegt, eine zweite Stellung eine zweite Polarität festlegt, die zur ersten Polarität entgegengesetzt ist, und eine dritte Stellung einen passiven Zustand festlegt.

## Revendications

1. Dispositif de pulvérisation à jet d'air (10) pour pulvériser un mélange liquide-gaz (20), comprenant un châssis (30), un canon de pulvérisation à jet d'air (40) et un actionneur (50) qui est agencé entre le châssis (30) et le canon de pulvérisation à jet d'air (40) pour la rotation du canon de pulvérisation à jet d'air (40) par rapport au châssis (30) dans un sens de rotation entre une première et une deuxième position d'extrémité (A, B), dans lequel les première et deuxième positions d'extrémité sont déterminées par, respectivement, un premier et un deuxième moyen de détermination de position, dans lequel chaque moyen de détermination de position est configuré pour détecter l'une desdites première et deuxième positions d'extrémité et pour inverser le sens de rotation sur la base de la détection, **caractérisé en ce que** le dispositif de pulvérisation à jet d'air comprend en outre un arc gradué (80) qui est prévu sur le châssis (30), dans lequel les premier et deuxième moyens de détermination de position comprennent un premier et un deuxième élément de limitation de position (60a, 60b) et un relais de commutation compatible avec les premier et deuxième éléments de limitation de position, dans lequel le relais de commutation est couplé au canon de pulvérisation à jet d'air, dans lequel le premier et le deuxième élément de limitation de position sont couplés à l'arc gradué et dans lequel le sens de rotation suit l'arc gradué (80).

2. Dispositif de pulvérisation à jet d'air (10) selon la revendication 1, dans lequel l'arc gradué est pourvu d'une pluralité de verrous (80a, 80b, ..., 80g) qui sont répartis sur l'arc gradué, dans lequel chaque verrou est configuré pour recevoir l'un du premier et du deuxième élément de limitation de position (60a, 60b).

3. Dispositif de pulvérisation à jet d'air (10) selon l'une quelconque des revendications précédentes, dans lequel au moins un autre moyen de détermination de position (60a, 60b, ..., 60g) est prévu, dans lequel chaque moyen de détermination de position peut être réglé sur l'un d'un état actif et d'un état passif, dans lequel, dans l'état actif, le moyen de détermination de position détecte la position d'extrémité.

4. Dispositif de pulvérisation à jet d'air (10) selon la revendication 1, comprenant en outre une source d'alimentation (100) qui est configurée pour alimenter l'actionneur (50), et dans lequel le relais de commutation (120) est fonctionnellement couplé à un premier circuit de commande (110), dans lequel le premier circuit de commande est configuré pour inverser le sens de rotation de l'actionneur sur la base du relais de commutation (120).

5. Dispositif de pulvérisation à jet d'air (10) selon la revendication précédente, dans lequel le relais de commutation (120) est un relais qui peut être commuté magnétiquement.

6. Dispositif de pulvérisation à jet d'air (10) selon la revendication précédente, dans lequel les moyens de détermination de position comprennent des aimants.

7. Dispositif de pulvérisation à jet d'air (10) selon la revendication précédente, dans lequel les moyens de détermination de position comprennent des électroaimants.

8. Dispositif de pulvérisation à jet d'air (10) selon la revendication précédente, dans lequel une polarité d'au moins une partie des électroaimants peut être commandée individuellement au moyen d'un deuxième circuit de commande (130).

9. Dispositif de pulvérisation à jet d'air (10) selon la revendication précédente, dans lequel le relais de commutation (120) est un relais Reed de verrouillage.

10. Dispositif de pulvérisation à jet d'air (10) selon la revendication précédente, dans lequel le deuxième circuit de commande est un commutateur à trois positions, dont une première position et une deuxième position déterminent un état actif, dans lequel la première position détermine une première polarité, une deuxième position détermine une deuxième polarité qui est opposée à la première polarité, et une troisième position détermine un état passif.
